# EUROPEAN PATENT SPECIFICATION

(11) **EP 3 349 109 B1**
(45) Date of publication and mention of the grant of the patent: **07.06.2023**
(21) Application number: 18150406.9
(22) Date of filing: 05.01.2018
(51) Int. Cl.: H04N 1/00

(54) **GENERATION OF A PREVIEW OF AN IMAGE IN A PRINT JOB**
ERZEUGUNG EINER VORSCHAU EINES BILDES IN EINEM DRUCKAUFTRAG
GÉNÉRATION D'UNE PRÉVISUALISATION D'IMAGE DANS UNE TÂCHE D'IMPRESSION

(30) Priority: 16.01.2017 EP 17151680
(43) Date of publication of application: 18.07.2018
(73) Proprietor: Canon Production Printing Holding B.V., 5914 HH Venlo (NL)
(72) Inventor: SCHENK, Hugouw T., 5914 CA Venlo (NL); HERMANS, Frank, 5914 CA Venlo (NL)
(74) Representative: Canon Production Printing IP Department

(56) References cited:
- US-A1- 2006 023 240
- US-A1- 2009 116 058

## Description

### Field of the Invention

The present invention generally pertains to a method for generating a preview image of an image in a print job for displaying in a user interface of a print system.

The present invention further provides a computer program product implementing such method.

The present invention also provides a printer controller that generates a preview image of an image in a print job.

The present invention further provides a print system that comprises such printer controller.

### Background Art

It is known to generate previews and thumbnails of images to be printed by the raster image processor (RIP) of a print system.

Thumbnails serve in general to be displayed in a user interface to allow quick visual identification of images, pages, print jobs, etc. They generally have a low resolution as they are to be displayed along various other elements in the user interface such as texts to further identify the images, pages, print jobs, etc., properties of the images, pages, print jobs, etc., and controls for controlling the print system, setting and changing properties of the images, pages, print jobs, etc.

Previews may serve the same purposes as thumbnails, but previews may also be used to preview the effect of certain settings such as job settings, print settings, etc. Previews typically still have a lower resolution than the native print resolution although it is possible that a preview is generated at the native print resolution, but with settings serving the preview process (for example display hardware typically uses a red-green-blue colour space while print engines typically use a cyan-magenta-yellow-key colour space).

Previews and thumbnails have in common that they need to be available before the image to be printed is actually printed by the print engine in order to allow the user of the printing system to set print properties for a print job, set properties for the processing of individual pages or images to be printed and preview the effect of such settings before the print engine actually starts printing the print job comprising the pages or images. Furthermore, they need to be available without any major delay once requested by the user interface of the print system. If this is not the case, the user of the print system may perceive the user interface as unresponsive or at least badly responsive. Furthermore, usually they have in common that they are to be generated at a lower resolution than the native print resolution resulting in their generation times generally being significantly lower than the generation time of the raster images to be printed, which are at the native print engine resolution.

For the sake of conciseness, previews and thumbnails will, in the remainder of this document, collectively be referred to as previews unless specifically denoted otherwise.

In simple RIP architectures (single raster image processor core), previews may be generated on demand. In such an architecture, the delay for generating the preview comprises of course the generation of the preview itself, but if the RIP is already occupied by the generation of a raster image for printing purposes, an additional delay is introduced for the RIP to finish the generation of the image it is already working on. For cut sheet printers this delay may in some cases still be acceptable, but for wide format printers, this delay will quickly become an issue given the much larger images to be rasterised. In cases where the architecture uses a queueing mechanism to queue images to be processed in the RIP, either the preview images will have to wait until all earlier images in the queue have been processed first, which will generally result in unacceptable delays in the user interface, or some priority system should be implemented to allow the preview images to bypass the queue in order to be processed earlier. Such a priority system makes the queueing system more complex though.

In parallel RIP architectures with four or more RIP instances, one solution employed is to have one RIP instance dedicated to the generation of preview images. Although this guarantees there are always processing resources for the generation of preview images, it also means that when the print engine is running for a long time unattended, for example during unattended overnight production, the RIP is not used optimally, because one of the RIP instances is sitting idle for a long time. In the case of a RIP with four RIP instances, only 75 % of the RIP resources is used during such periods.

US 2009/116058 A1 discloses an image output apparatus including: an image processing section for processing an image; a printing section that prints the image; a display section that displays the image; an instruction section that allows a user to instruct execution of a print job, and execution of a display job; and a job control section that controls the jobs to start the execution of the print job or the display job in response to the instruction, wherein when the job control section receives instructions to start print jobs and/or display jobs, the job control section controls the jobs to register the print jobs and/or the display jobs in a queue and start these jobs in the order, and when an instruction for a display job in the queue is again received from the instruction section, the job control section controls the jobs to move the display job to the forefront of the queue.

The object of the present invention is to overcome or at least mitigate these disadvantages of the prior art.

### Summary of the Invention

In a first aspect of the present invention, a method is provided for generating a preview of an image in a print job comprising the steps of: creating a preview RI P-job at the head of a RIP-job queue, the RIP-job queue queueing in first-in-first-out order RIP-jobs to be submitted to and processed by a raster image processor, and the preview RIP-job arranged to register images to be submitted to the raster image processor for generating a preview of the image, registering the image in the preview RIP-job in order for the image to be submitted to the raster image processor, wherein the preview RIP-job is created at the head of the RIP-job queue, and the preview RIP-job is not removed from the RIP-job queue upon the preview RIP-job becoming empty, the RIP job queue providing an image from the first non-empty RIP-job starting from the head of the RIP-job queue to the raster image processor.

The preview may be a low resolution image for identifying a print job in the print queue of the printer controller, identifying a page or image to be printed in a print job, or a preview image with a resolution that is typically lower than the native print engine resolution that is intended to be used in the user interface of the printer controller for previewing purposes, i.e. allowing the user to check prior to printing whether the image is rendered as intended by the user and does not contain undesired artefacts.

Pages in this context refer to pages in the traditional sense, such as pages processed in a cut sheet printer (each side of a sheet corresponding to a page), but also refers to individual images printed on a role, web, or large format sheet printed on a table printer, wherein the individual images are intended to be separated from each other by cutting, or folding combined with trimming, or similar techniques, i.e. the pages resulting from dividing a larger sheet into smaller sheets. In this context pages and images to be printed are synonymous.

The preview RIP-job behaves in the RIP-job queue just as any other RIP-job. Upon creation it is created at the head of the RIP-job queue. Due to the first-in-first-out behaviour of the RIP-job queue images registered in the preview RIP-job are automatically processed by the raster image processor before any images that are registered in any other RIP-job without any need for the implementation of a specific priority scheme in the RIP-job queue or in the RIP-jobs themselves or alternative ways to have preview images bypass other images to be ripped. This way the raster image processor is always first fed with images from the preview RIP-job, therefore making sure that images intended to be used in the user interface are always processed first resulting in a more responsive user interface.

Note that the verb "rip" is used inhere to refer to the activity of the raster image processor generating raster images provided in a Page Description Language (PDL).

Preview images that are intended to be used in the user interface are queued by a user interface generation device in the preview RIP-job, while images intended to be printed by the print engine are queued in any other RIP-job.

Registering a page in a RIP-job may comprise storing the actual content of the page (for example a page description in a PDL), but preferably comprises storing a page identifier or other reference to the page. Note that any means of associating a page with a RIP-job is suitable.

The preview RIP-job will not be removed from the RIP-job queue if the preview RIP-job becomes empty. Nor will it be removed from the RIP-job queue due to other RIP-jobs becoming empty or being completed. The state of any other RIP-job or print job is irrelevant. Basically, the only reason to remove the preview RIP-job from the RIP-job queue is as part of a shutdown process or restart or reinitialisation process of the printer controller or part of the printer controller.

Note that a RIP-job becoming empty in general is not necessarily a trigger to remove the RIP-job from the RIP-job queue. As described further on dedicated mechanisms may be implemented to control when a RIP-job may be removed from the RIP-job queue, the RIP-job being empty being only one condition to be met.

In order to ensure that the preview RIP-job is created at the head of the RIP-job queue, a dedicated creation mechanism may be implemented for the preview RIP-job. However, in order to keep the implementation simple, in a preferred aspect of the invention the preview RIP-job is created at the head of the RIP-job queue by creating the preview RIP-job before any other RIP-job is queued. This way the preview RIP-job is automatically at the head of the RIP-job queue due to the first-in-first-out behaviour of the RIP-job queue.

In a further aspect of the invention the preview RIP-job is created during system start-up, for example during initialisation of the RIP-job queue. This ensures that no RIP-jobs are present in the RIP-job queue and the preview RIP-job ends up at the head of the RIP-job queue and does not require dedicated mechanisms to allow for the queueing of an object at the head of the queue.

In one aspect of the present invention the method further comprises the steps of: a) checking whether a number of ripped but unprinted images is below a first predetermined threshold, b) checking whether a number of unripped images in RIP-jobs other than the preview RIP-job exceeds a second predetermined threshold, and c) suspending submission of an image to the preview RIP-job as long as the conditions of both steps a) and b) are met. This ensures it is not possible to make the print process starve due to a large number of preview images to be generated while there are also images to be ripped to feed the printing process. The thresholds allow for balancing between preview image generation and ripping to feed the printing process (ripping to produce raster images for the print engine). Note that any or both of the thresholds may be chosen to be zero.

In one aspect of the present invention a preview is displayed in a user interface.

The present invention provides a computer program product embodied on a non-transitory computer readable medium that, if executed on a processor, performs any of the methods as described above.

According to another embodiment the present invention provides a printer controller arranged to control a print engine, the printer controller comprising: a print job reception device; a RIP-job generator connected to the print job reception device and arranged to determine at least one RIP-job for the print job, wherein the RIP-job is arranged to register images in a page description language; a raster image processor for generating a raster image for an image provided to the raster image processor in a page description language; a RIP-job queue connected to the RIP-job generator and to the raster image processor, and arranged to receive RIP-jobs from the RIP-job generator, queue the RIP-jobs in a first-in-first-out order, and provide an image from the first non-empty RIP-job starting from the head of the RIP-job queue to the raster image processor; wherein the printer controller is further arranged to: create a preview RIP-job at the head of the RIP-job queue; and register images to be previewed in the preview RIP-job; and wherein the preview RIP-job is created at the head of the RIP-job queue; and the preview RIP-job is maintained in the RIP-job queue upon the preview RIP-job becoming empty.

The print job reception device may comprise logic to receive print jobs from workstations connected to the printer controller through a network. The print job reception device may also comprise logic to receive a print job internally created in the controller for example in the context of a copy job comprising of a scan job and a corresponding print job, or in the context of a new print job being created in the printer controller by deriving the new print job from an existing print job.

According to a further embodiment the present invention provides a printer controller wherein the preview RIP-job is created at the head of the RIP-job queue by creating the preview RIP-job before any other RIP-job is queued.

According to a preferred embodiment a printer controller is provided wherein the preview RIP-job is created during system start-up.

According to another embodiment the present invention provides a printer controller further arranged to: a) check whether a number of unprinted raster images is below a first predetermined threshold, b) checking whether a number of images in RIP-jobs other than the preview RIP-job exceeds a second predetermined threshold, and c) suspending submission of an image to the preview RIP-job as long as the conditions of both steps a) and b) are met.

In another embodiment according to the invention a printer controller is provided that further comprises a user interface generation device, wherein the printer controller is arranged to: submit an image from a print job that is to be previewed through the user interface to be generated by the user interface generation device to the preview RIP-job; and have the corresponding raster image generated by the raster image processor provided to the user interface generation device. The generated preview image is subsequently displayed on a display device to allow the user to view the preview image. According to another embodiment the invention provides a print system comprising a print engine for forming an image on a media by depositing marking material on the media, the print system further comprising the print controller as described above, wherein the print controller is connected to the print engine and is arranged to provide a raster image to be printed to the print engine and to control the print engine in order to have the print image form the image on the media.

Further scope of applicability of the present invention will become apparent from the detailed description given hereinafter.

### Brief Description of the Drawings

The present invention will become more fully understood from the detailed description given hereinbelow and the accompanying schematical drawings which are given by way of illustration only, and thus are not limitative of the present invention, and wherein:
Fig. 1 is a block diagram showing the components of a general printer to which the present invention may be applied.
Fig. 2 is a block diagram showing the functional components used to implement the present invention.
Fig. 3 is a diagram showing the jobs the present invention acts upon.
Fig. 4 is a flow diagram showing the queueing of jobs according to an embodiment of the present invention.
Fig. 5 is a flow diagram showing the processing of jobs according to an embodiment of the present invention.
Fig. 6 is a flow diagram of a further embodiment of the present invention.

### Detailed Description of the Drawings

The present invention will now be described with reference to the accompanying drawings, wherein the same reference numerals have been used to identify the same or similar elements throughout the several views.

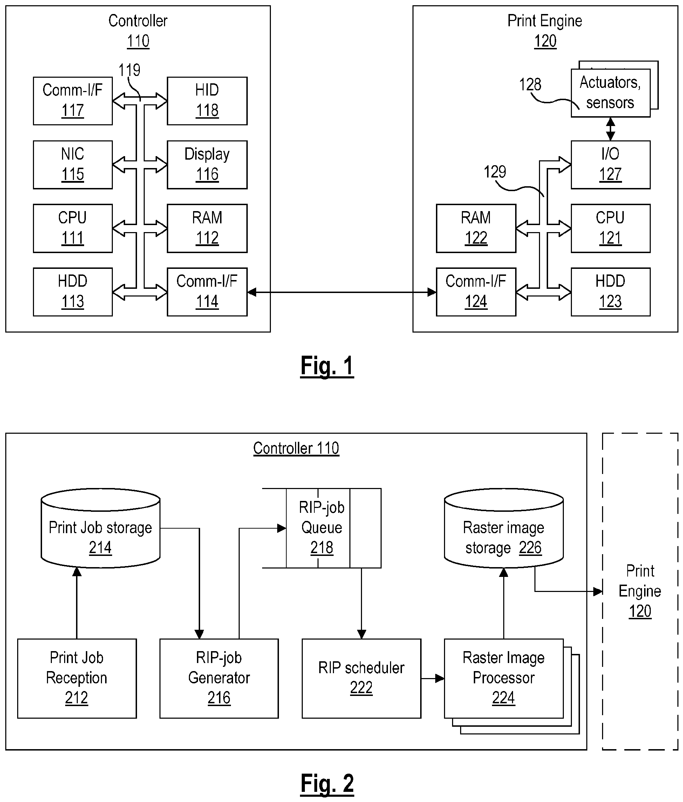

A typical reprographic apparatus (fig. 1) such as a printer generally comprises a controller 110 and an engine 120.

The engine 120 is responsible for low-level control of the apparatus. It deals with individual hardware components that are responsible for the reprographic process such as drives for media transport, media detectors (in the media path as well as in the input and output media trays), path switches, fusers, print heads, etc.; in general actuators and sensors 128. These actuators and sensors are connected through input/output (I/O) boards 127 to a bus 129. The bus 129 connects the major components in the engine 120. Actual data processing takes place in a central processing unit (CPU) 121. The CPU 121 reads sensor values from the sensors 128 through the I/O 127. Based on these sensor values and other data such as print data and print commands received from the controller 110, the CPU 121 determines how the engine 120 should respond to this information and determines appropriate actuation values that are sent through the I/O 127 to the actuators 128. The engine 120 comprises a volatile memory such as a random access memory (RAM) 122 to temporarily store data for processing such as the print data and print commands received from the controller 110, and the sensor values read from the sensors 128. Furthermore, a non-volatile memory such as a hard disk drive (HDD) 123 serves to store data in a more permanent manner, for example to survive a power down of the system. This hard disk drive 123 typically also stores embedded software comprising computer instructions that are run on the CPU 121. The engine 120 typically runs a real-time Operating System (RTOS), for example a soft real-time Operating System in order to deal with the time critical functions of controlling the actuators 128. The engine 120 further comprises a communication device 124 to communicate with the controller 110. Typically, the engine 120 receives print data and print commands from the controller 110 and provides back status information on the engine 120 itself and on the processing of the print commands and print data, including sending error messages to the controller 110.

The controller 110 is connected to the engine 120 through a communication device 114 that communicates with the communication device 124 of the engine 120. These communication devices 114, 124 may be implemented as Ethernet network interface controllers (NIC). Processing in the controller 110 is done by a CPU 111 that is connected to all the other components in the controller 110 through a bus 119. The data to be processed is temporarily stored in a volatile memory such as RAM 112, while data is stored in a more permanent manner in a non-volatile memory such as hard disk drive 113, for example in order to survive power downs, but also to relieve the volatile memory 112 which typically has a smaller storage size. The hard disk drive 113 typically stores print jobs, each comprising print data and a job ticket. Furthermore, the hard disk drive 113 comprises converted print data which is print data converted to a format suitable for processing by the engine 120. Typically the converted print data comprises raster images. Converting the print data in the print jobs to converted print data is typically done in a Raster Image Processor (RIP). Although the RIP may be a dedicated hardware device, it is common to be implemented in software and running on CPU 111. As the RIP-process is rather computationally intensive, it is common for controllers 110 to have multiple processing units in the form of a multi-core CPU 111 or multiple CPUs 111. The controller 110 further comprises a display 116 to show messages to an operator, or display a complete graphical user interface (GUI) to an operator for operating the reprographic apparatus. The display 116 is supplemented by a human interface device (HID) 118 such as a keyboard, mouse, touchpad, stylus, or touch sensitive panel integrated into display 116, and allows the operator to operate the reprographic apparatus. The controller 110 comprises a communication interface 117 for communicating with peripheral devices such as finisher, for example, stackers, staplers, binders, punchers, cutters, trimmers, folders, media input units, etc. The controller 110 further comprises a network interface card (NIC) 115 to connect the controller 110 to a computer network. Through the network connection, print jobs may be submitted to the controller 110 and the results of scan jobs may be retrieved from the controller 110. For these operations the controller 110 may be directly in communication with individual workstations, or indirectly through a print server. Furthermore, the network connection may be used to remotely operate the reprographic apparatus, monitor its status, and send production data to monitoring systems, accounting systems, or business information systems. Note that in smaller printer models, specifically printers suitable for placement on desks, it is common to use communication interfaces such as USB, FireWire, or Bluetooth instead of the NIC 115.

The controller 110 and the engine 120 may be implemented in a single printer device (typical for smaller printers for low volume printing), or as two separate, but interconnected devices (typical for larger, high-volume production printers).

The engine 120 typically deals with print data on a sheet level, swath level, or even line level. The engine 120 is generally not aware of information on a document or even job level. In contrast the controller 110 receives print jobs comprising one or more documents. In the case of cut sheet printers the documents typically comprise multiple pages.

The images to be printed are typically provided to the printer formatted according to a Page Description Language (PDL). Although the word 'page' in 'Page Description Language' may suggest that a PDL is specifically applicable to cut sheet printers, this is not the case. PDLs are also used to submit images to be printed to roll printers, web printers, table printers, etc., or to the controllers of such printers. Furthermore, the word 'image' in this document refers to data describing in some format an intended image to be printed on the printer. The print data may be formatted in varying forms, for example a description of a rasterised image in the TIFF (Tagged Image File Format) format, but also in the form of object descriptions, such as a rectangle with given or implied properties such as dimensions, position, orientation, and colour, or a text string with given or implied properties. The raster image processor will take this print data and generate a print engine specific raster image. In here such print engine specific raster images will generally be referenced as 'raster images'. Even if the print data is provided as a rasterised image or contains a rasterised image, the raster image processor generally still has to generate the print engine specific raster image for such a rasterised image in order to take into account the particular imaging process of the print engine. In cut sheet printers the rasterised image generated by the raster image processor typically corresponds to all content to be printed on a single page (one side of a sheet) by the print engine.

In a typical embodiment the invention is implemented in the controller 110 of a reprographic apparatus such as a printer. Jobs entering the system may be created locally, for example in the case of a copy job the controller may first spawn a scan job followed by a print job that is created based on the scan data obtained from the scan job. Alternatively, the job may be created remotely, for example in a remote workstation submitting a print job through a printer driver. In both cases, the new job is being initially handled by a job reception module such as the print job reception module 212 (Fig. 2) in controller 110 of a printer. The print job reception module 212 may inform the printer driver in a remote workstation of the capabilities of the printer and may receive print data as well as a ticket defining the job settings, printer settings, etc. Once the print job reception module 212 successfully received a new print job, it stores the print job in the print job storage 214. A RIP-job generator 216 is responsible for making sure the images / pages in a print job are converted to print engine specific raster images. To that end, it creates RIP-jobs. A RIP-job is a set of one or more images that are to be processed by the raster image processor 224. In a straightforward example there is a one-to-one correspondence between a print job and a RIP-job, although this is not a necessity and one particular exception according to the present invention will be detailed further on. A RIP-job is temporarily stored or registered in the RIP-job queue 218. The RIP-job queue 218 is typically implemented as a first-in-first-out queue: RIP-jobs are taken out of the queue for processing in the order they were added to the queue. Note that it is not necessary for a RIP-job to already be complete before being queued. For example, the RIP-job generator 216 may be implemented according to a parallel architecture where multiple worker processes process print jobs and generate RIP-jobs for each print job in parallel. A RIP-job may initially even be queued as an empty RIP-job and being gradually filled with images. The RIP scheduler 222 feeds the raster image processor 224 with images from the RIP-job queue 218. The raster image processor 224 may be a single processor or may implement a parallel architecture where multiple processors work on multiple images concurrently. In the case of the raster image processor 224 comprising only a single processor, the job of the RIP scheduler is more or less trivial and may even be omitted, the raster image processor 224 simply continuing work on the first available image in the RIP-job Queue 218. Furthermore, the RIP scheduler 222 may be implemented as a selection mechanism in each individual raster image processor 224. Once the raster image processor 224 has generated a raster image, the raster image is temporarily stored in the raster image storage 226. From the raster image storage 226 the raster images to be printed are provided to the print engine 120.

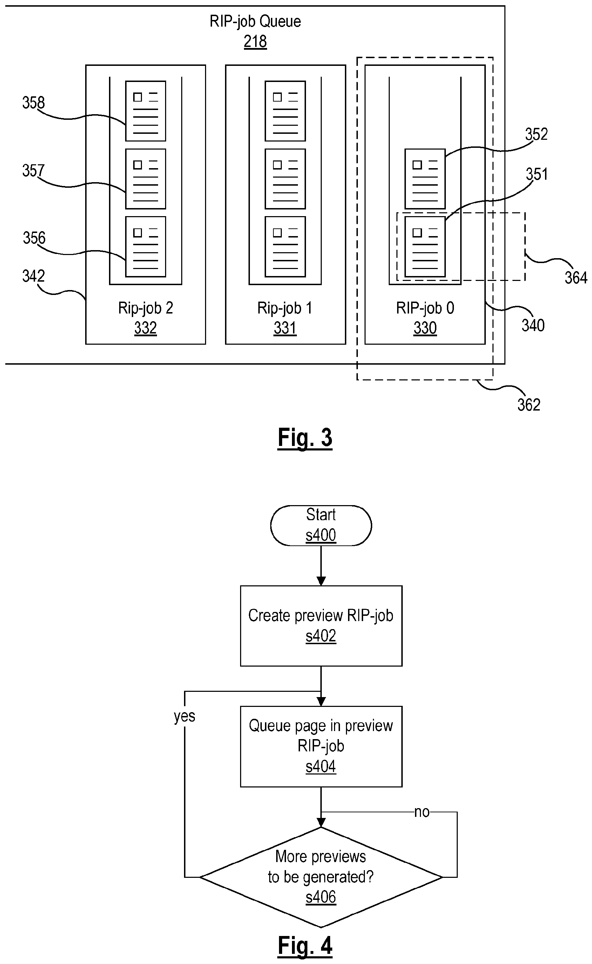

As described above, the RIP-job queue 218 serves to queue RIP-jobs 330-332 (Fig. 3). The depicted RIP-job queue 218 is a first-in-first-out queue wherein the oldest RIP-job queued, RIP-job 330, at position 0 of the RIP-job queue 218, is at the head 362 of the RIP-job queue 218. In the next position, position 1, is the next RIP-job 331. The last RIP-job queued, RIP-job 332, is in the last position, position 2. When the RIP scheduler 222 is ready to schedule a next image to be processed by the raster image processor 224, it will first check at the head 362 of the RIP-job queue 218 for images to RIP. The RIP-jobs themselves may be implemented as sets holding images to be processed in no particular order. However, typically there will at least be some implicit ordering and in practice a first-in-first-out ordering is a straightforward one. The presence of an ordering inside a RIP-job and the kind of ordering is of no significance to the invention though. The example depicted in Fig. 3 shows the RIP-jobs 330-332 as first-in-first-out queues having a queue head 364. In this particular case, the RIP scheduler 222 will check whether an image 351-358 to be rasterised is at the head 364 of the RIP-job that itself is at the head 362 of the RIP-job queue 218. If it detects an image 351 in that position, this image 351 will be removed from the RIP-job 330 and provided to the raster image processor 224 for processing. The next image 352 in the RIP-job 330 will than move to the head 364 of the RIP-job 330 to be processed next. Once a processor of the raster image processor 224 becomes available, the RIP scheduler 222 will again check the head 364 of the RIP-job 330 that is at the head 362 of the RIP-job queue 218 for the presence of an image 351-358 and find the next image 352 there and provide it to the processor of the raster image processor 224.

Once a RIP-job 330-332 is empty, it is not necessarily removed from the RIP-job 218 until it has been determined that the RIP-job has been completed, as the RIP-job generator 216 may still have images 351-358 to queue for this RIP-job 330-332. This may be realised by the RIP-job generator 216 setting a 'complete' property on the RIP-job 330-332 once it has determined that there are no more images 351-358 to assign to the particular RIP-job 330-332. Then the RIP-job 330-332 is removed from the RIP-job queue 218 once it has been determined that the RIP-job 330-332 is empty and the 'complete' property is set.

If a processor of the raster image processor 224 is available and the RIP scheduler 222 is determining the next image 351-358 to process, it may find an empty RIP-job 330 at the head 362 of the RIP-job queue 218. In that case, it will simply move on to the next position, position 1, in the RIP-job queue 218 and so on, to find a RIP-job 330-332 that contains an image 351-358 to be processed. This allows the raster image processor 224 to keep on processing even if earlier RIP-jobs 330-332 in the queue are not ready to be processed first. This is advantageous as usually the process of rasterising images into print engine specific raster images is computationally the most demanding process in a printer.

In order to allow previews to be generated, an embodiment according to the present invention has a dedicated preview RIP-job 330 and this dedicated preview RIP-job 330 is created at the head 362 of the RIP-job queue 218. Dedicated means in this context that the RIP-job 330 is not used to queue images for rasterising for printing purposes to the native print engine resolution as those rasterisation processes are typically computationally much more expensive. Furthermore, creation of previews is a more or less continuous thing as long as the printer is operational allowing for previews to be generated for newly created print jobs. Therefore, the 'complete' property on the dedicated preview RIP-job 330 is not set unless the printer is for example commanded to shut down or to restart. In any case, the completion status of the dedicated preview RIP-job 330 is not dependent on the completion or state of any specific print job or other RIP-job 331-332.

The queuing of previews may be done according to the flow chart in Fig. 4. The flow chart starts s400 and first creates s402 the preview RIP-job 330 at the start of the RIP job queue 218 if such preview RIP-job 330 does not exist yet. (For example, the RIP job queue 218 may be implemented persistent such that the preview RIP-job 330 survives a system restart.) After the preview RIP-job 330 has been created, any request for a preview results in the creation of an image 351, 352 that is queued in the preview RIP-job 330 in the RIP-job queue 218. A request for a preview may be generated by the print job reception module 212 as soon as a new print job is received (for example from a print job submitter such as a printer driver, or locally created in the printer due to a copy or scan job being started). The request may also be generated by a user interface module that generates widgets to be displayed on the display 116 of the device, such widgets comprising buttons for operating the device, thumbnails for allowing a user to identify jobs such as print jobs, copy jobs, and scan jobs, as well as image previews for allowing a user to inspect an image before it is (further) processed (for example prior to printing). In the former case, the previews are generated in advance in order to allow them to be readily available as soon as needed. In the latter case, the previews are generated on the fly when actually needed in the user interface.

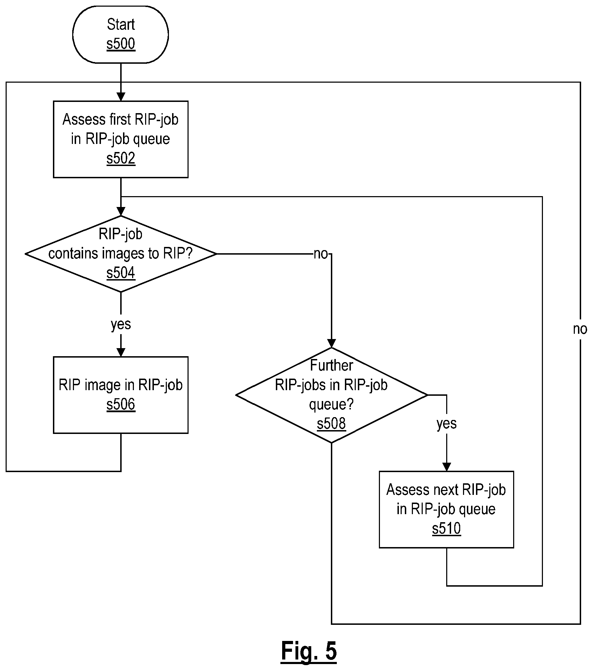

Processing the images 351-358 waiting in RIP-jobs 330-332 by the RIP scheduler 222 is illustrated in the flow chart of Fig. 5. The flow chart starts s500 and assesses s502 the first RIP-job 330 in the RIP-job queue 218 for the presence of images 351-358 to RIP. Note that the first RIP-job is the RIP-job at the head 362 of the RIP-job queue 218. If it is determined s504 that this RIP-job contains at least one image to RIP, the yes-branch is followed and an image 351 from the RIP-job is provided to Raster Image Processor 214 to be ripped (s506). Note that if the RIP-jobs 330-332 are implemented as first-in-first-out queues, just like the RIP-job queue 218, the image taken from the RIP-job 330 is the image at the head 364 of the RIP-job 330. If the Raster Image Processor 214 requests a further image to be processed, the flow loops back to step s502 and again first the RIP-job 330 at the head 362 of the RIP-job queue 218 is assessed for the presence of images 351-358 to RIP. In case the RIP-job 330 at the head 362 of the RIP-job queue 218 does not contain any further images 351-358 to process, the flow follows the no-branch from decision s504 and determines (s508) whether there is a next RIP-job 331-332 in the RIP-job queue 218. If it is determined that there is a next RIP-job 331-332 (yes-branch), the next RIP-job 331-332 is assessed (s510). If it is determined (s504) that the next RIP-job 331-332 contains an image 351-358 to RIP, the image is also sent (s506) to the Raster Image Processor 214 to be ripped. Going back to the decision s508, if there are no more RIP-jobs 331-332 in the RIP-job queue 218, the process loops back (no-branch) to step s502 to check again with the first RIP-job 330 in the RIP-job queue 218, basically looping until new images show up in an existing RIP-job 330-332 or in a newly created RIP-job.

Note that the process in Fig. 5 is independent of whether an image to be ripped is for generating a preview or a full page-sized image in the print engine's native resolution intended for printing by the print engine 120. Therefore, the implementation of the invention does not require any modifications to the RIP-job queue 218, the RIP scheduler 222, or the Raster Image Processor 224. Nor is a dedicated Raster Image Processor for generating previews necessary. The only modification that is needed is in the generation of the preview RIP-job 330 and in the submission of the images for preview generation to the RIP-job queue 218. The generation of the preview RIP-job 330 may be done by the RIP-job generator 216, for example upon start-up of the device. An alternative implementation has the generation of the preview RIP-job 330 in the RIP-job queue as part of the initialisation routines of the RIP-job queue 218 (for example as part of the constructor method of the RIP-job queue class).

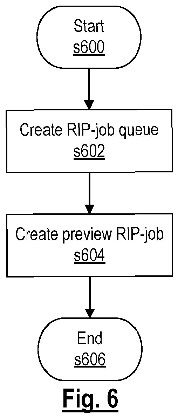

The easiest way to ensure that the preview RIP-job 330 is created at the head 362 of the RIP-job queue 218 is to make the creation part of the creation/initialisation process of the RIP-job queue 218 (see Fig. 6). On device start-up (s600), as part of the device initialisation process, the RIP-job queue 218 is created (s602). Before the RIP-job generator 216 is activated, a preview RIP-job 330 is created (s604) and the process of ensuring the preview RIP-job 330 is created at the head 362 of the RIP-job queue 218 ends (s606). In the case that the RIP-job queue 218 is implemented in software, the creation of the preview RIP-job 330 may be done in the constructor method of the RIP-job queue 218. That way, the preview RIP-job 330 is automatically created as part of the RIP-job queue 218 creation and the preview RIP-job 330 is guaranteed to exist at the head 362 of the RIP-job queue 218.

The invention allows for generating previews of images 351-358 through the same Raster Image Processor 224 as used for generating full page-size images at the print engine's native solution and the generation of the previews to be responsive without the RIP-job queue 218 having explicit support for prioritised jobs.

As images 351-352 in the preview RIP-job 330 are always processed before the images 353-358 in the ordinary RIP-jobs 331-332, it is possible to bring the ripping of images for printing to a halt by flooding the preview RIP-job 330 with images. This may happen if the preview images for thumbnails are queued for ripping upon reception of the print job (so prior to the user interface actually needing the thumbnails) and one or more print jobs with many pages is received. It takes quite a number of queued images 351-352 for this to happen though as the thumbnails in the user interface typically have small sizes and ripping to small images takes considerably less time than ripping to full page-sized bitmaps at the native print engine resolution. This issue is less prominent when the previews are requested by the user interface on demand, as there typically only fit a limited number of thumbnails on the display of the device. Furthermore, in the case of generating preview images for previewing purposes, this issue does usually also not occur as such preview images are typically requested on demand and a user may typically only preview a single image (single page) or two images (two-page spread preview) at a time. However, occurrence of this issue may be prevented forcedly by imposing a constraint on the number of preview images 351-352 the preview RIP-job 330 will accept (for example hard limit on queue length), on the number of preview image requests the user interface will have pending simultaneously, or on the rate with which the user interface submits preview images 351-352. Note that implementing such constraints will increase print engine productivity at the expense of reduced user interface responsiveness.

Detailed embodiments of the present invention are disclosed herein; however, it is to be understood that the disclosed embodiments are merely exemplary of the invention, which can be embodied in various forms. Therefore, specific structural and functional details disclosed herein are not to be interpreted as limiting, but merely as a basis for the claims and as a representative basis for teaching one skilled in the art to variously employ the present invention in virtually any appropriately detailed structure. In particular, features presented and described in separate dependent claims may be applied in combination and any advantageous combination of such claims is herewith disclosed.

Further, the terms and phrases used herein are not intended to be limiting; but rather, to provide an understandable description of the invention. The terms "a" or "an", as used herein, are defined as one or more than one. The term plurality, as used herein, is defined as two or more than two. The term another, as used herein, is defined as at least a second or more. The terms including and/or having, as used herein, are defined as comprising (i.e., open language). The term coupled, as used herein, is defined as connected, although not necessarily directly.

## Claims

1. Method for generating a preview of an image (351, 352) in a print job comprising the steps of:
• creating (s402, s604) a preview RIP-job (330) in a RIP-job queue (218), the RIP-job queue (218) queueing in first-in-first-out order RIP-jobs (351-358) to be submitted to and processed by a raster image processor (224), and the preview RIP-job (330) arranged to register images (351, 352) to be submitted to the raster image processor (224) for generating a preview of the image (351, 352), and
• registering (s404) the image (351, 352) in the preview RIP-job (330) in order for the image (351, 352) to be submitted to the raster image processor (224),
**characterised in that**
the preview RIP-job (330) is created (s402, s604) at the head (362) of the RIP-job queue (218), and
the preview RIP-job (330) is not removed from the RIP-job
queue (218) upon the preview RIP-job (330) becoming empty, the RIP job queue providing an image from the first non-empty RIP-job starting from the head of the RIP-job queue to the raster image processor.

2. Method according to claim 1 wherein the preview RIP-job (330) is created at the front of the RIP-job queue (218) by creating the preview RIP-job (330) before any other RIP-job (331, 332) is queued.

3. Method according to any of the preceding claims wherein the preview RIP-job (330) is created (s604) during system start-up.

4. Method according to any of the preceding claims wherein ripping the preview RIP-job comprises ripping to a lower resolution than the native print engine resolution.

5. Method according to any of the preceding claims further comprising the steps of:
a) checking whether a number of ripped but unprinted images is below a first predetermined threshold,
b) checking whether a number of unripped images (353-358) in RIP-jobs (331, 332) other than the preview RIP-job (330) exceeds a second predetermined threshold, and
c) suspending submission of an image (351, 352) to the preview RIP-job (330) as long as the conditions of both steps a) and b) are met.

6. Method according to any of the preceding claims further comprising displaying a preview in a user interface.

7. A computer program product embodied on a non-transitory computer readable medium that, if executed on a processor (111), performs the steps of the method of any of claims 1-6.

8. Printer controller (110) arranged to control a print engine (120), the printer controller (110) comprising:
• a print job reception device (212);
• a RIP-job generator (216) connected to the print job reception device (212) and arranged to determine at least one RIP-job (331, 332) for the print job, wherein the RIP-job (331, 332) is arranged to register images (353-358) in a page description language;
• a raster image processor (224) for generating a raster image for an image (351-358) provided to the raster image processor (224) in a page description language;
• a RIP-job queue (218) connected to the RIP-job generator (216) and to the raster image processor (224), and arranged to receive RIP-jobs (331, 332) from the RIP-job generator (216) and queue the RIP-jobs (331, 332) in a first-in-first-out order; wherein the printer controller (110) is further arranged to:
• create (s402, s604) a preview RIP-job (330) in the RIP-job queue (218); and
• register (s404) images to be previewed in the preview RIP-job (330);
**characterised in that**
the preview RIP-job (330) is created (s402, s604) at the head (362) of the RIP-job queue (218);
the preview RIP-job (330) is maintained in the RIP-job queue (218) upon the preview RIP-job (330) becoming empty, and
the RIP job queue provides an image (351-358) from the first non-empty RIP-job (330-332) starting from the head (362) of the RIP-job queue (218) to the raster image processor (224).

9. Printer controller (110) according to claim 8 wherein the preview RIP-job (330) is created (s402, s604) at the head (362) of the RIP-job queue (218) by creating the preview RIP-job (330) before any other RIP-job (331, 332) is queued.

10. Printer controller (110) according to claim 8 or 9 wherein the preview RIP-job (330) is created (s604) during system start-up.

11. Printer controller (110) according to claim 8, 9, or 10 wherein the raster image processor (224) generating a raster image for an image (351, 352) from the preview RIP-job (330) comprises generating a raster image with a lower resolution than the native print engine resolution.

12. Printer controller (110) according to any of claims 8-11 further arranged to:
a) check whether a number of unprinted raster images is below a first predetermined threshold,
b) checking whether a number of images (353-358) in RIP-jobs (331, 332) other than the preview RIP-job (330) exceeds a second predetermined threshold, and
c) c) suspending submission of an image (351, 352) to the preview RIP-job (330) as long as the conditions of both steps a) and b) are met.

13. Printer controller (110) according to any of claims 8-12 further comprising a user interface generation device, wherein the printer controller (110) is arranged to:
• submit an image (351, 352) from a print job that is to be previewed through the user interface to be generated by the user interface generation device to the preview RIP-job (330); and
• have the corresponding raster image generated by the raster image processor (224) provided to the user interface generation device.

14. Print system comprising a print engine (120) for forming an image on a media by depositing marking material on the media, the print system further comprising the print controller (110) of any of claims 8-13, wherein the print controller (110) is connected to the print engine (120) and is arranged to provide a raster image to be printed to the print engine (120) and to control the print engine (120) in order to have the print image form the image on the media.

## Patentansprüche

1. Verfahren zum Erzeugen einer Vorschau eines Bildes (351, 352) in einem Druckauftrag, mit den folgenden Schritten:
- erzeugen (s402, s604) eines Vorschau-RIP-Auftrags (330) in einer RIP-Auftragsschlange (218), wobei die RIP-Auftragsschlange (218) RIP-Aufträge (351-358), die zur Verarbeitung an einen Rasterbildprozessor (224) weiterzuleiten sind, nach dem First-In-First-Out-Prinzip aufreiht und der Vorschau-RIP-Auftrag (330) dazu eingerichtet ist, Bilder (351-352) zu registrieren, die an den Rasterbildprozessor (224) zu übermitteln sind, um eine Vorschau des Bildes (351, 352) zu generieren, und
- registrieren (s404) des Bildes (351, 352) in dem Vorschau-RIP-Auftrag (330), damit das Bild an den Rasterbildprozessor (224) übermittelt werden kann,
**dadurch gekennzeichnet, dass**
der Vorschau-RIP-Auftrag (330) am Kopf (362) der RIP-Auftragsschlange (218) erzeugt wird (s402, s604), und
der Vorschau-RIP-Auftrag (330) nicht aus der RIP-Auftragsschlange (218) entfernt wird, wenn der Vorschau-RIP-Auftrag (330) leer wird, wobei die RIP-Auftragsschlange ein Bild von dem ersten, beginnend ab dem Kopf der RIP-Auftragsschlange, nicht leeren RIP-Auftrag,an den Rasterbildprozessor liefert.

2. Verfahren nach Anspruch 1, bei dem der Vorschau-RIP-Auftrag (330) auf der Frontseite der RIP-Auftragsschlange (218) erzeugt wird, indem der Vorschau-RIP-Auftrag (330) erzeugt wird, bevor irgendein anderer RIP-Auftrag (331, 332) eingereiht wird.

3. Verfahren nach einem der vorstehenden Ansprüche, bei dem der Vorschau-RIP-Auftrag (330) während des Hochfahrens des Systems erzeugt wird (S604).

4. Verfahren nach einem der vorstehenden Ansprüche, bei dem das Raster des Vorschau-RIP-Auftrags ein Raster mit einer niedrigeren Auflösung umfasst als die intrinsische Auflösung der Druckvorrichtung.

5. Verfahren nach einem der vorstehenden Ansprüche, mit den folgenden weiteren Schritten:
a) prüfen, ob eine Anzahl von gerasterten aber noch nicht gedruckten Bildern unterhalb eines ersten vorbestimmten Schwellenwertes liegt,
b) prüfen, ob eine Anzahl von ungerasterten Bildern (353-358) in anderen RIP-Aufträgen (331, 332) als dem Vorschau-RIP-Auftrag (330) einen zweiten vorbestimmten Schwellenwert übersteigt, und
c) aussetzen der Übermittlung eines Bildes (351, 352) an den Vorschau-RIP-Auftrag (330) solange die Bedingungen beider Schritte a) und b) erfüllt sind.

6. Verfahren nach einem der vorstehenden Ansprüche, mit dem weiteren Schritt der Anzeige einer Vorschau auf einer Benutzerschnittstelle.

7. Computerprogrammprodukt auf einem nichtflüchtigen, von einem Computer lesbaren Medium, das, wenn es auf einem Prozessor (111) ausgeführt wird, die Schritte des Verfahrens nach einem der Ansprüche 1 bis 6 ausführt.

8. Druckersteuergerät (110), das dazu eingerichtet ist, eine Druckvorrichtung (120) zu steuern, wobei das Druckersteuergerät (110) aufweist:
- eine Empfangseinrichtung (212) für Druckaufträge;
- einen RIP-Auftragserzeuger (216), der mit der Empfangseinrichtung (212) für Druckaufträge verbunden und dazu eingerichtet ist, wenigstens einen RIP-Auftrag (331,332) für den Druckauftrag zu bestimmen, wobei der RIP-Auftrag (331, 332) dazu eingerichtet ist, Bilder (353-358) in einer Seitenbeschreibungssprache zu registrieren;
- einen Rasterbildprozessor (224) zum Erzeugen eines Rasterbildes für ein Bild (351-358), das in einer Seitenbeschreibungssprache an den Rasterbildprozessor (224) übermittelt wurde,
- eine RIP-Auftragsschlange (218), die mit dem RIP-Auftragserzeuger (216) und dem Rasterbildprozessor (224) verbunden und dazu eingerichtet ist, RIP-Aufträge (331, 332) von dem RIP-Auftragserzeuger (216) zu empfangen und die RIP-Aufträge (331, 332) nach dem First-In-First-Out-Prinzip aufzureihen; wobei das Druckersteuergerät (110) weiterhin dazu eingerichtet ist:
- einen Vorschau-RIP-Auftrag (330) in der RIP-Auftragsschlange (218) zu erzeugen (S402, S604); und
- Bilder, die in dem Vorschau-RIP-Auftrag (330) anzuzeigen sind, zu registrieren (s404);
**dadurch gekennzeichnet, dass**
der Vorschau-RIP-Auftrag (330) am Kopf (362) der RIP-Auftragsschlange (218) erzeugt wird, (s402, s604);
der Vorschau-RIP-Auftrag (330) in der RIP-Auftragsschlange (218) behalten wird, wenn der Vorschau-RIP-Auftrag (330) leer wird, und
die RIP-Auftragsschlange ein Bild (351-358) von dem ersten, beginnend ab dem Kopf (362) der RIP-Auftragsschlange (218), nicht leeren RIP-Auftrag (330-332) an den Rasterbildprozessor (224) übermittelt.

9. Druckersteuergerät (110) nach Anspruch 8, bei dem der Vorschau-RIP-Auftrag (330) am Kopf (362) der RIP-Auftragsschlange (218) erzeugt wird (s402, s604) indem der Vorschau-RIP-Auftrag (330) erzeugt wird, bevor irgendein anderer RIP-Auftrag (331, 332) eingereiht wird.

10. Druckersteuergerät (110) nach Anspruch 8 oder 9, bei dem der Vorschau-RIP-Auftrag (330) während des Hochfahrens des Systems erzeugt wird (s604).

11. Druckersteuergerät (110) nach Anspruch 8 oder 9 oder 10, bei dem die Erzeugung eines Rasterbildes für ein Bild (351, 352) aus dem Vorschau-RIP-Auftrag (330) durch den Bildprozessor (224) das Erzeugen eines Rasterbildes mit einer geringeren Auflösung einschließt als die intrinsische Auflösung der Druckvorrichtung.

12. Druckersteuergerät (110) nach einem der Ansprüche 8 bis 11, das weiterhin dazu eingerichtet ist:
a) zu prüfen, ob eine Anzahl von noch nicht gedruckten Rasterbildern unterhalb eines ersten vorbestimmten Schwellenwertes liegt,
b) zu prüfen, ob eine Anzahl von Bildern (353-358) in anderen RIP-Aufträgen (331, 332) als dem Vorschau-RIP-Auftrag (330) einen zweiten vorbestimmten Schwellenwert übersteigt, und
c) aussetzen der Übermittlung eines Bildes (351, 352) an den Vorschau-RIP-Auftrag (330), solange die Bedingungen beider Schritte a) und b) erfüllt sind.

13. Druckersteuergerät (110) nach einem der Ansprüche 8 bis 12, das weiterhin eine Erzeugungseinrichtung für eine Benutzerschnittstelle aufweist, wobei das Druckersteuergerät (110) dazu eingerichtet ist:
- ein Bild (351, 352) von einem Druckauftrag, das zur Vorschau durch die von der Erzeugungseinrichtung für Benutzerschnittstellen zu erzeugenden Benutzerschnittstelle anzuzeigen ist, an den Vorschau-RIP-Auftrag (330) zu übermitteln; und
- das betreffende Rasterbild, das an die Erzeugungseinrichtung für Benutzerschnittstellen übermittelt wurde, durch den Rasterbildprozessor (224) rastern zu lassen.

14. Druckersystem mit einer Druckvorrichtung (120) zur Erzeugung eines Bildes auf einem Medium durch Aufbringen von Markierungsmaterial auf das Medium, wobei das Druckersystem weiterhin das Druckersteuergerät (110) nach einem der Ansprüche 8 bis 13 aufweist, wobei das Druckersteuergerät (110) mit der Druckvorrichtung (120) verbunden und dazu eingerichtet ist, ein Rasterbild zu liefern, das durch die Druckvorrichtung (120) zu drucken ist, und die Druckvorrichtung (120) anzusteuern, um die Druckvorrichtung das Bild auf dem Medium erzeugen zu lassen.

## Revendications

1. Procédé de génération d'une prévisualisation d'une image (351, 352) dans une tâche d'impression, comprenant les étapes consistant à :
- créer (s402, s604) une tâche RIP de prévisualisation (330) dans une file d'attente de tâches RIP (218), la file d'attente de tâches RIP (218) mettant en file d'attente selon un ordre premier entré, premier sorti des tâches RIP (351-358) à envoyer vers et à traiter par un processeur d'images tramées (224), et la tâche RIP de prévisualisation (330) étant conçue pour enregistrer des images (351, 352) à envoyer au processeur d'images tramées (224) pour générer une prévisualisation de l'image (351, 352), et
- enregistrer (s404) l'image (351, 352) dans la tâche RIP de prévisualisation (330) afin que l'image (351, 352) soit envoyée au processeur d'images tramées (224),
**caractérisé en ce que**
la tâche RIP de prévisualisation (330) est créée (s402, s604) au début (362) de la file d'attente de tâches RIP (218), et
la tâche RIP de prévisualisation (330) n'est pas retirée de la file d'attente de tâches RIP (218) lorsque la tâche RIP de prévisualisation (330) devient vide, la file d'attente de tâches RIP fournissant au processeur d'images tramées une image provenant de la première tâche RIP non vide en commençant par le début de la file d'attente de tâches RIP.

2. Procédé selon la revendication 1, dans lequel la tâche RIP de prévisualisation (330) est créée au début de la file d'attente de tâches RIP (218) en créant la tâche RIP de prévisualisation (330) avant la mise en file d'attente de toute autre tâche RIP (331, 332).

3. Procédé selon l'une quelconque des revendications précédentes, dans lequel la tâche RIP de prévisualisation (330) est créée (s604) pendant le démarrage du système.

4. Procédé selon l'une quelconque des revendications précédentes, dans lequel le rippage de la tâche RIP de prévisualisation comprend le rippage à une résolution inférieure à la résolution native du moteur d'impression.

5. Procédé selon l'une quelconque des revendications précédentes, comprenant en outre les étapes consistant à :
a) vérifier si un nombre d'images rippées mais non imprimées est inférieur à un premier seuil prédéterminé,
b) vérifier si un nombre d'images non rippées (353-358) dans des tâches RIP (331, 332) autres que la tâche RIP de prévisualisation (330) dépasse un second seuil prédéterminé, et
c) suspendre l'envoi d'une image (351, 352) vers la tâche RIP de prévisualisation (330) tant que les conditions des deux étapes a) et b) sont remplies.

6. Procédé selon l'une quelconque des revendications précédentes, comprenant en outre l'affichage d'une prévisualisation dans une interface utilisateur.

7. Produit de programme informatique incorporé sur un support non transitoire lisible par ordinateur qui, s'il est exécuté sur un processeur (111), réalise les étapes du procédé selon l'une quelconque des revendications 1-6.

8. Dispositif de commande d'imprimante (110) conçu pour commander un moteur d'impression (120), le dispositif de commande d'imprimante (110) comprenant :
- un dispositif de réception de tâches d'impression (212) ;
- un générateur de tâches RIP (216) connecté au dispositif de réception de tâches d'impression (212) et conçu pour déterminer au moins une tâche RIP (331, 332) pour la tâche d'impression, dans lequel la tâche RIP (331, 332) est conçue pour enregistrer des images (353-358) dans un langage de description de page ;
- un processeur d'images tramées (224) pour générer une image tramée pour une image (351-358) fournie au processeur d'images tramées (224) dans un langage de description de page ;
- une file d'attente de tâches RIP (218) connectée au générateur de tâches RIP (216) et au processeur d'images tramées (224), et conçue pour recevoir des tâches RIP (331, 332) provenant du générateur de tâches RIP (216) et pour mettre en file d'attente les tâches RIP (331, 332) selon un ordre premier entré, premier sorti ; dans lequel le dispositif de commande d'imprimante (110) est en outre conçu pour :
- créer (s402, s604) une tâche RIP de prévisualisation (330) dans la file d'attente de tâches RIP (218) ; et
- enregistrer (s404) des images à prévisualiser dans la tâche RIP de prévisualisation (330) ;
**caractérisé en ce que**
la tâche RIP de prévisualisation (330) est créée (s402, s604) au début (362) de la file d'attente de tâches RIP (218) ;
la tâche RIP de prévisualisation (330) est conservée dans la file d'attente de tâches RIP (218) lorsque la tâche RIP de prévisualisation (330) devient vide, et
la file d'attente de tâches RIP fournit au processeur d'images tramées (224) une image (351-358) provenant de la première tâche RIP non vide (330-332) en commençant par le début (362) de la file d'attente de tâches RIP (218).

9. Dispositif de commande d'imprimante (110) selon la revendication 8, dans lequel la tâche RIP de prévisualisation (330) est créée (s402, s604) au début (362) de la file d'attente de tâches RIP (218) en créant la tâche RIP de prévisualisation (330) avant la mise en file d'attente de toute autre tâche RIP(331, 332).

10. Dispositif de commande d'imprimante (110) selon la revendication 8 ou 9, dans lequel la tâche RIP de prévisualisation (330) est créée (s604) pendant le démarrage du système.

11. Dispositif de commande d'imprimante (110) selon la revendication 8, 9 ou 10, dans lequel la génération par le processeur d'images tramées (224) d'une image tramée pour une image (351, 352) à partir de la tâche RIP de prévisualisation (330) comprend la génération d'une image tramée présentant une résolution inférieure à la résolution native du moteur d'impression.

12. Dispositif de commande d'imprimante (110) selon l'une quelconque des revendications 8-11, configuré en outre pour :
a) vérifier si un nombre d'images tramées non imprimées est inférieur à un premier seuil prédéterminé,
b) vérifier si un nombre d'images (353-358) dans des tâches RIP (331, 332) autres que la tâche RIP de prévisualisation (330) dépasse un second seuil prédéterminé, et
c) suspendre l'envoi d'une image (351, 352) vers la tâche RIP de prévisualisation (330) tant que les conditions des deux étapes a) et b) sont remplies.

13. Dispositif de commande d'imprimante (110) selon l'une quelconque des revendications 8-12, comprenant en outre
un dispositif de génération d'interface utilisateur, dans lequel le dispositif de commande d'imprimante (110) est configuré pour :
- envoyer une image (351, 352) provenant d'une tâche d'impression qui doit être prévisualisée via l'interface utilisateur devant être générée par le dispositif de génération d'interface utilisateur vers la tâche RIP de prévisualisation (330) ; et
- assurer la fourniture de l'image tramée correspondante générée par le processeur d'images tramées (224) au dispositif de génération d'interface utilisateur.

14. Système d'impression comprenant un moteur d'impression (120) pour former une image sur un support en déposant une matière de marquage sur le support, le système d'impression comprenant en outre le dispositif de commande d'impression (110) selon l'une quelconque des revendications 8-13, dans lequel le dispositif de commande d'impression (110) est connecté au moteur d'impression (120) et est configuré pour fournir une image tramée à imprimer au moteur d'impression (120) et pour commander le moteur d'impression (120) afin d'amener l'image d'impression à former l'image sur le support.
